# EUROPEAN PATENT SPECIFICATION

(11) **EP 4 102 114 B1**
(45) Date of publication and mention of the grant of the patent: **21.08.2024**
(21) Application number: 21784966.0
(22) Date of filing: 09.04.2021
(51) Int. Cl.: F16K 5/02, F24C 3/12, F16K 5/08, F23N 1/00

(54) **PLUG VALVE AND HOUSEHOLD APPLIANCE**
STOPFENVENTIL UND HAUSHALTSGERÄT
SOUPAPE D'OBTURATION ET APPAREIL ÉLECTROMÉNAGER

(30) Priority: 10.04.2020 CN 202010280561
(43) Date of publication of application: 14.12.2022
(73) Proprietor: Foshan Shunde Midea Washing Appliances Manufacturing Co., Ltd., Foshan, Guangdong 528311 (CN)
(72) Inventor: ZHANG, Yibin, Foshan, Guangdong 528311 (CN); QI, Zhengsheng, Foshan, Guangdong 528311 (CN); GUAN, Youlin, Foshan, Guangdong 528311 (CN)
(74) Representative: Whitlock, Holly Elizabeth Ann
(86) International application number: PCT/CN2021/086128
(87) International publication number: WO 2021/204236

(56) References cited:
- CN-A- 106 704 624
- CN-A- 109 268 523
- CN-A- 109 973 674
- CN-A- 110 953 365
- CN-A- 110 953 365
- CN-A- 111 396 586
- CN-U- 201 697 177
- CN-U- 201 697 177
- CN-U- 206 458 847
- CN-U- 206 458 847
- CN-U- 209 278 591
- CN-U- 209 278 591
- CN-U- 212 203 199
- KR-A- 20090 044 128
- US-A1- 2010 154 777

## Description

### TECHNICAL FIELD

The present invention relates to the technical field of household appliances, and more particularly, to a plug valve and a household appliance.

### BACKGROUND

For a gas stove in daily life, a gas plug valve is a valve used to adjust and control ON-OFF of gas manually and adjust a gas flux. Currently, the gas plug valve is provided with a sensitive switch for igniting the gas plug valve. However, the gas plug valve does not output electrical signals any more after ignition. As a result, the gas stove cannot recognize whether the plug valve is currently in an open or closed state, which is unconducive to a function expansion. To this end, in the related art, the plug valve has two switches, and correspondingly, a valve stem of the gas plug valve is provided with trigger structures for triggering these two switches, respectively. These trigger structures are usually formed and processed separately, which sets significantly higher processing requirements on the valve stem, thereby likely resulting in complicated processes and low production efficiency of the gas plug valve. CN206458847U and CN209278591U disclose a plug valve for controlling the flow of gas in a gas stove.

### SUMMARY

Embodiments of the present invention provide a plug valve and a household appliance.

According to an embodiment of the present invention, a plug valve includes: a body; a valve seat mounted on the body and having a hollow mounting column provided thereon, the mounting column having a first space and a second space that are defined in a circumferential sidewall thereof; a valve stem disposed on the valve seat and penetrating the mounting column, wherein the valve stem has one trigger groove defined in an outer peripheral surface thereof, and the trigger groove comprises an upper trigger surface and a lower trigger surface; a first switch mounted on the valve seat and comprising a first trigger terminal penetrating the first space; and the second switch mounted on the valve seat and comprising a second trigger terminal penetrating the second space. The plug valve is configured in a manner that: when the valve stem is pressed, the first trigger terminal is triggered by the upper trigger surface to enable the first switch to be in a first state, and the second trigger terminal is triggered by the lower trigger surface to enable the second switch to be in a second state; and when the valve stem is released from pressing, the first trigger terminal is triggered by the upper trigger surface to enable the first switch to be in a third state, and the lower trigger surface enables the second switch to be kept in the second state or the second trigger terminal is triggered by the lower trigger surface to enable the second switch to be in a fourth state.

In the above plug valve, by providing two switches are provided, different states of the two switches can be combined with each other to provide more functional applications for meeting more demands. In addition, by providing one single trigger groove on the valve stem to form a corresponding trigger structure, the processing requirements for the valve stem can be simplified, thereby bringing higher and more reliable production efficiency.

In some embodiments, the upper trigger surface is a plane, and/or the lower trigger surface is a plane.

In some embodiments, the first space and the second space are partially opposite to each other in a predetermined direction, and the predetermined direction includes a vertical direction.

In some embodiments, each of the first space and the second space includes a through hole.

In some embodiments, the first switch is in a normally OFF state under a normal circumstance, and the second switch is in an ON state under the normal circumstance.

In some embodiments, the valve stem has a snapping block protruding from a bottom thereof, the valve seat has a regulating surface and a snapping groove that are defined in the bottom thereof, and the snapping block is located in the snapping block to limit a rotation of the valve stem. When the valve stem is pressed, the snapping block leaves the snapping groove to remove a limitation on the rotation of the valve stem. When the valve stem is rotated, the snapping block is located on the regulating surface. When the valve stem is released from pressing, the snapping block is located on the regulating surface, or the snapping block is located in the snapping groove.

In some embodiments, a height difference between a bottom surface of the snapping groove and the regulating surface is smaller than a distance, by which the upper trigger surface moves downwardly to abut the first trigger terminal when the valve stem is pressed; and the height difference between the bottom surface of the snapping groove and the regulating surface is greater than a distance, by which the lower trigger surface moves downwardly to leave the second trigger terminal when the valve stem is pressed.

In some embodiments, the plug valve further includes a protruding portion disposed on the regulating surface, wherein the protruding portion and the snapping groove together are configured to limit a rotation angle range of the valve stem.

In some embodiments, the plug valve further includes a valve core, a valve core needle, a toggle lever, and a third switch. The valve core and the toggle lever are located in the body. The valve stem is capable of driving the valve core to rotate synchronously. The third switch is connected to the body. The valve core needle is connected to the valve stem and is configured to penetrate the valve core. The valve stem is configured to drive, in response to the valve stem being pressed, the toggle lever through the valve core needle to rotate for triggering the third switch.

In some embodiments, the plug valve further includes a valve core needle spring sleeved on the valve core needle and configured to drive, in response to the valve stem being released from pressing, the valve stem to move.

In some embodiments, the valve core has a first chamber, a second chamber, and a valve core perforation hole communicating the first chamber with the second chamber. The valve core needle spring is located in the first chamber; and the plug valve further includes a sealing member located in the first chamber; the valve core needle is configured to penetrate the first chamber, the valve core perforation hole, and the second chamber; and the valve core needle spring is configured to tightly press the sealing member to seal a gap between the valve core needle and the valve core perforation hole.

In some embodiments, the plug valve further includes a gasket located between the valve core needle spring and the sealing member.

In some embodiments, the first chamber has a mounting groove defined on a bottom surface thereof, and the sealing member is at least partially located in the mounting groove.

In some embodiments, the first trigger terminal has a first inclined surface facing towards the upper trigger surface and inclined away from an axial direction of the valve stem, and the second trigger terminal has a second inclined surface facing towards the lower trigger surface and inclined away from the axial direction of the valve stem.

In some embodiments, the plug valve further includes a first fastening member and a second fastening member. The valve seat has a first protrusion, a second protrusion, a first fixation hole, and a second fixation hole, which are provided thereon. The first switch has a first recess and a first mounting hole. The second switch has a second recess and a second mounting hole. The first protrusion is located in the first recess. The first fastening member is configured to penetrate the first mounting hole and is connected to a hole wall of the first mounting hole to fix the first switch. The second protrusion is located in the second recess. The second fastening member is configured to penetrate the second mounting hole and is connected to a hole wall of the second fixation hole to fix the second switch.

According to an embodiment of the present invention, a household appliance includes the plug valve according to any one of the above embodiments.

In some embodiments, the household appliance includes a fuel gas appliance.

In the above household appliance, by providing two switches are provided, different states of the two switches can be combined with each other to provide more functional applications for meeting more demands. In addition, by providing one single trigger groove on the valve stem to form a corresponding trigger structure, the processing requirements for the valve stem can be simplified, thereby bringing higher and more reliable production efficiency.

Additional aspects and advantages of the embodiments of the present invention will be provided at least in part in the following description, or become apparent at least in part from the following description, or can be learned from practicing of the present invention.

### BRIEF DESCRIPTION OF DRAWINGS

The above and/or additional aspects and advantages of the present invention will become more apparent and more understandable from the following description of embodiments in conjunction with the accompanying drawings, in which:
FIG. 1 is a top view of a plug valve according to an embodiment of the present invention;
FIG. 2 is a cross-sectional view of a plug valve in FIG. 1 taken along a direction A-A;
FIG. 3 is an enlarged view of a part I in FIG. 2;
FIG. 4 is a structural schematic diagram of a valve seat according to an embodiment of the present invention;
FIG. 5 is a structural schematic diagram of a valve stem according to an embodiment of the present invention;
FIG. 6 is another structural schematic diagram of a valve seat according to an embodiment of the present invention;
FIG. 7 is a cross-sectional view of a plug valve in FIG. 1 taken along a direction B-B;
FIG. 8 is a structural schematic diagram of a toggle lever according to an embodiment of the present invention;
FIG. 9 is a structural schematic diagram of a first switch according to an embodiment of the present invention;
FIG. 10 is a structural schematic diagram of a second switch according to an embodiment of the present invention;
FIG. 11 is a structural schematic diagram of a valve stem in the related art; and
FIG. 12 is a structural schematic diagram of a trigger terminal of a switch in the related art.

Reference numerals of main components:
plug valve 100; body 10; fluid channel 12; valve seat 20; mounting column 22; first space 222; second space 224; regulating surface 21; snapping groove 23; bottom surface 232; first protrusion 24; second protrusion 25; first fixation hole 26; second fixation hole 27; first fastening member 28; second fastening member 29; valve stem 30; trigger groove 31; upper trigger surface 312; lower trigger surface 314; first switch 32; first trigger terminal 322; first inclined surface 3222; first fixation hole 328; second switch 34; second trigger terminal 342; second inclined surface 3422; second fixation hole 348; snapping block 35; protruding portion 40; valve core 50; first chamber 52; mounting groove 522; sealing member 524; gasket 53; second chamber 54; inner wall 542; fluid through hole 5422; valve core perforation hole 56; valve core needle 58; toggle lever 60; toggle member 62; toggle lever groove 621; lever body 63; toggle lever bend 64; third switch 70; elastic member 72; sealing pad 74; valve core needle spring 80; perforation hole 110; gas outlet pipe 120.

Reference numerals of main components in the related art: valve stem 1; first trigger groove 101; first trigger surface 1011; second trigger groove 102; second trigger surface 1022; convex portion 1023; detection switch 3; trigger terminal 300; right-angled end surface 301.

### DESCRIPTION OF EMBODIMENTS

Embodiments of the present invention are described below in detail, examples of the embodiments are shown in accompanying drawings, and throughout the description, the same or similar reference signs represent the same or similar components or the components having the same or similar functions. The embodiments described below with reference to the accompanying drawings are exemplary and merely used to explain the present invention, rather than being construed as limitation on the present invention.

In the description of the present invention, it should be understood that the orientation or position relationship indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", etc., is based on the orientation or position relationship shown in the drawings, and is only for the convenience of describing the present invention and simplifying the description, rather than indicating or implying that the defined device or element must have a specific orientation or must be constructed and operated in a specific orientation. Thus, the orientation or position relationship indicated by these terms cannot be understood as limitations of the present invention. In addition, the terms "first" and "second" are only used for purpose of description, and cannot be understood as indicating or implying relative importance or implicitly indicating the number of indicated technical features. Therefore, the features defined with "first" and "second" may explicitly or implicitly include at least one of the features. In the description of the present invention, "plurality" means at least two, unless otherwise specifically defined.

In the present invention, unless expressly stipulated and defined otherwise, the first feature "on" or "under" the second feature may include the scenarios that the first feature is in direct contact with the second feature, or the first and second features, instead of being in direct contact with each other, are in contact with each other through another feature therebetween. Moreover, the first feature "above" the second feature may indicate that the first feature is directly above or obliquely above the second feature, or simply indicate that the level of the first feature is higher than that of the second feature. The first feature "below" the second feature may mean that the first feature is directly below or obliquely below the second feature, or simply mean that the level of the first feature is smaller than that of the second feature.

In the description of the present invention, it should be noted that, unless otherwise clearly specified and limited, terms such as "install", "mount", "connect to" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those of ordinary skill in the art, the specific meaning of the above-mentioned terms in the present disclosure can be understood according to specific circumstances.

Various embodiments or examples for implementing different structures of the present invention are provided below. In order to simplify the description of the present invention, components and arrangements of specific examples are described herein. Of course, the specific examples are merely for the purpose of illustration, and they are not intended to limit the present invention. Furthermore, the same reference numerals and/or reference letters may appear in different examples of the present invention for the purpose of simplicity and clarity, instead of indicating a relationship between different embodiments and/or arrangements under discussion. In addition, the present invention provides examples of various specific processes and materials. However, applications of other processes and/or the use of other materials are conceivable for those skilled in the art.

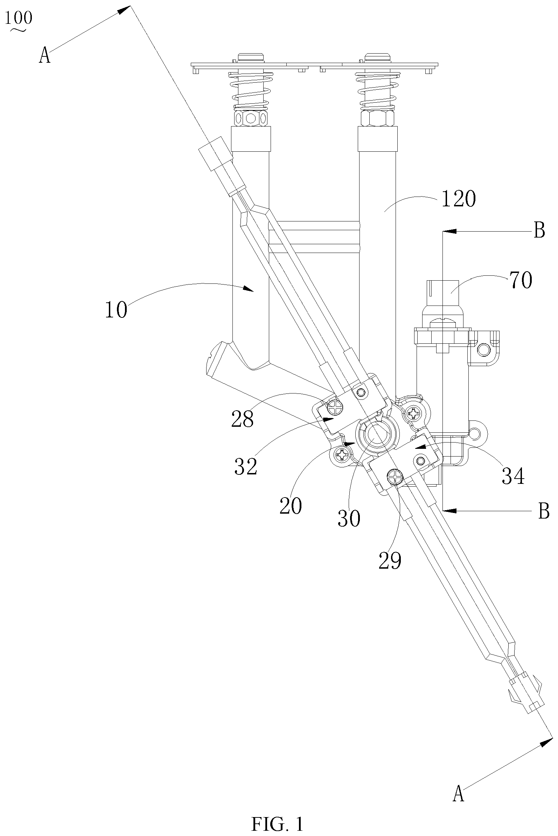

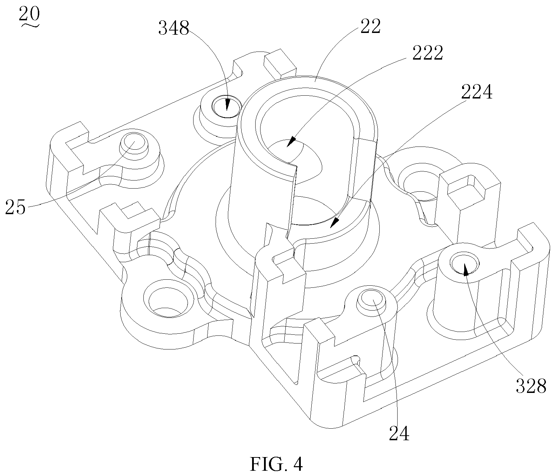

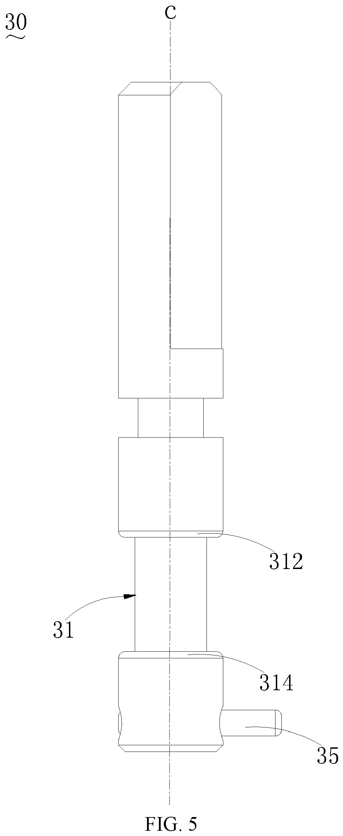

Referring to FIG. 1 to FIG. 10, a plug valve 100 provided by an embodiment of the present invention includes a body 10, a valve seat 20, a valve stem 30, a first switch 32, and a second switch 34. The valve seat 20 is mounted on the body 10 and has a hollow mounting column 22 provided thereon. The mounting column 22 has a first space 222 and a second space 224 that are defined in a circumferential sidewall thereof (referring to FIG. 4). The valve stem 30 is disposed on the valve seat 20 and penetrates the mounting column 22. The valve stem 30 has one trigger groove 31 defined in an outer peripheral surface thereof. The trigger groove 31 has an upper trigger surface 312 and a lower trigger surface 314 (referring to FIG. 5). The first switch 32 and the second switch 34 are mounted on the valve seat 20. The first switch 32 includes a first trigger terminal 322 penetrating the first space 222, and the second switch 34 includes a second trigger terminal 342 penetrating the second space 224. The plug valve 100 is configured in such a manner that: when the valve stem 30 is pressed, the upper trigger surface 312 triggers the first trigger terminal 322 to enable the first switch 32 to be in a first state, and the lower trigger surface 314 triggers the second trigger terminal 342 to enable the second switch 34 to be in a second state; and when the valve stem 30 is released from pressing, the upper trigger surface 312 triggers the first trigger terminal 322 to enable the first switch 32 to be in a third state, and the lower trigger surface 314 enables the second switch 34 to be kept in the second state or the lower trigger surface 314 triggers the second trigger terminal 342 to enable the second switch 34 to be in a fourth state.

In the above plug valve 100, by providing two switches, different states of the two switches can be combined with each other to provide more functional applications for meeting more demands. In addition, by providing one single trigger groove 31 on the valve stem 30 to form a corresponding trigger structure, the processing requirements for the valve stem 30 can be simplified, thereby bringing higher and more reliable production efficiency.

In the related art, since most of the plug valves manually adjust and control the ON-OFF of gas, an output of electrical signals cannot be continuously outputted after ignition, and thus a valve state of the plug valve cannot be identified in this case. Accordingly, as the user is unable to know whether the plug valve is closed or opened when using a gas stove, potential safety hazards and operational difficulty may exist, which greatly affects using effect of the plug valve. In addition, the functions of the plug valve are simple, which is not conducive to a function expansion.

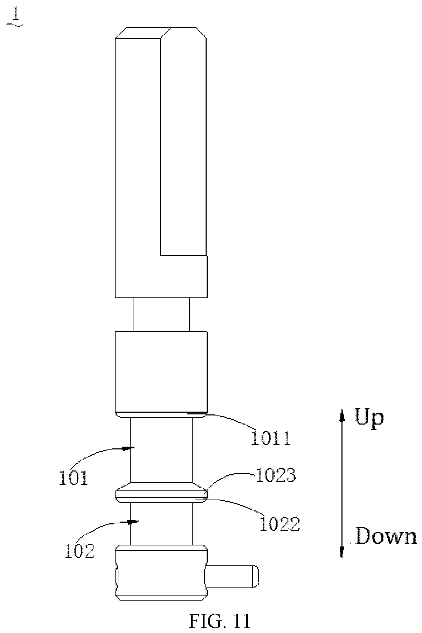

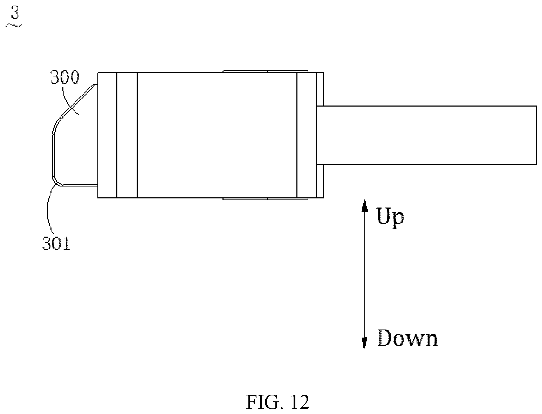

In addition, in the related art, a trigger terminal of a switch (such as a sensitive switch) generally has inclined surfaces with a certain slope on an upper side and a lower side of the trigger terminal. Referring to FIG. 11 and FIG. 12, a valve stem 1 in the related art has two trigger grooves defined therein, i.e., a first trigger groove 101 and a second trigger groove 102. The first trigger groove 101 and the second trigger groove 102 have a first trigger surface 1011 and a second trigger surface 1022, respectively. The first trigger surface 1011 is configured to trigger an ignition switch, and the second trigger surface 1022 is configured to trigger a detection switch 3. The first trigger surface 1011 is a top surface of the first trigger groove 101, and the second trigger surface 1022 is a top surface of the second trigger groove 102. A convex portion 1023, where the second trigger surface 1022 formed by the second trigger groove 102 is located, has a relatively thin thickness. Thus, when using the detection switch provided with a trigger terminal that has an inclined surface on each of the upper side and the lower side, the convex portion 1023 may move along the inclined surface on the lower side when the valve stem 1 is prevented from being pressed down to the bottom. In this way, the trigger terminal 300 of the detection switch 3 triggered by the second trigger surface 1022 may be separated from the second trigger surface 1022 and reset, thereby causing a trigger failure of the detection switch 3. However, the increased thickness of the convex portion 1023 may lengthen the overall length of the valve stem 1, which is not conducive to control of a finished product. Therefore, in the related art, the trigger terminal 300 of the detection switch 3 is processed in such a manner that a lower end of the trigger terminal 300 of the detection switch 3 is designed to have a right-angled end surface 301. Two surfaces connected to the right-angled end surface 301 are flat surfaces that can form an included angle of 90 degrees. A contact distance between the right-angled end surface 301 and the convex portion 1023 can be increased to solve a separation problem of the trigger terminal 300 of the detection switch 3 triggered by the second trigger surface 1022, which, however, may raise higher requirements on a shape and fabrication accuracy of the trigger terminal 300 and lower the production efficiency of the plug valve.

To sum up, in the related art, the plug valve having two trigger grooves defined on the valve stem 1 has high requirements on the shape of the trigger terminal 300 of the detection switch 3, thereby increasing a processing complexity of the plug valve. Therefore, the production efficiency of the plug valve is greatly reduced, and production costs of the plug valve are raised. To this end, in order to facilitate the user's operation, it is necessary to improve a structure of the plug valve.

In an embodiment, referring to FIG. 1, FIG. 5, and FIG. 9, for the plug valve 100 having one trigger groove 31, trigger surfaces of the plug valve 100 are respectively an upper surface and a lower surface of the trigger groove 31. Compared with the plug valve 100 having two trigger grooves in the related art, the plug valve 100 having one trigger groove 31 requires a shorter length of the valve stem 30, and thus production costs of the plug valve 100 are greatly lowered, and processing of the one trigger groove 31 at the valve stem 30 is relatively simple. In addition, the plug valve 100 having one trigger groove 31 enables the trigger terminal to accurately trigger the trigger surface, without processing a shape of the trigger terminal of the switch, which can avoid a case that the trigger terminal is separated from the trigger surface, thereby lowering requirements on the shape of the trigger terminal, and further improving the production efficiency of the plug valve.

Specifically, referring to FIG. 1, FIG. 2, and FIG. 4, the valve seat 20 and the valve stem 30 are provided on the body 10 of the plug valve 100. The valve seat 20 is provided with the mounting column 22, the first switch 32, and the second switch 34. The mounting column 22 is hollow, and the valve stem 30 can penetrate the mounting column 22. The first space 222 and the second space 224 are defined in a circumferential side wall of the mounting column 22. In an embodiment of the present invention, the first space 222 and the second space 224 are partially opposite to each other along a vertical direction.

The first space 222 can be a notch or a through hole, and the second space 224 can also be a notch or a through hole, which is not specifically limited the present disclosure. The notch can be an opening formed by removing a portion of the circumferential side wall of the mounting column 22 from the top to the bottom of the mounting column 22, and the notch can be in communication with the inside of the mounting column 22. The through hole may be a penetrating hole opened in the circumferential side wall of the mounting column 22 at a position below the top of the mounting column 22, and the through hole can be in communication with the inside of the mounting column 22. The through hole may be in a circular shape, an oval shape, a rectangular shape, or other shapes, and the present invention is not limited to any of these examples. In an embodiment illustrated in FIG. 4, the first space 222 is a notch, and the second space 224 is a through hole. In this case, compared with the provision of two through holes, the first space 222 does not need to pass through a window of a guide sleeve, and thus the process steps are relatively simple.

In the embodiments of the present invention, one trigger groove 31 is defined on the outer peripheral surface of the valve stem 30, and the trigger groove 31 includes the upper trigger surface 312 and the lower trigger surface 314. The upper trigger surface 312 is located above the lower trigger surface 314. The arrangement of one trigger groove 31 can simplify processing on a structure of the valve stem. For example, the single trigger groove 31 can be formed by grooving, such that the trigger groove 31 can be formed by only one step of processing. The trigger groove 31 can be in the shape of ring, i.e., around 360 degrees, or it may also be provided around an angle smaller than 360 degrees in consideration of a rotation route of the plug valve 100. Under a normal circumstance, the plug valve 100 is in a closed state, the gas is cut off, the upper trigger surface 312 is separated from the first trigger terminal 322 (the first trigger terminal 322 is not pressed) to enable the first switch 32 to be in the third state (normally OFF state), and the lower trigger surface 314 abuts the second trigger terminal 342 (i.e., the second trigger terminal 342 is pressed) to enable the second switch 34 to be in the fourth state (ON state). When the valve stem 30 is pressed, the upper trigger surface 312 abuts the first trigger terminal 322 to trigger the first trigger terminal 322 for enabling the first switch 32 to be in the first state (ON state), and the lower trigger surface 314 is separated from the second trigger terminal 342 to enable the second switch 34 to be in the second state (normally OFF state). When the valve stem 30 is released from pressing, the upper trigger surface 312 is separated from the first trigger terminal 322 to trigger the first trigger terminal 322 for enabling the first switch 32 to be in the third state (normally OFF state). In this case, the lower trigger surface 314 remains separated from the second trigger terminal 342 to keep the second switch 34 in the second state (normally OFF state); or the lower trigger surface 314 abuts the second trigger terminal 342 to trigger the second trigger terminal 342 for enabling the second switch 34 to be in the fourth state (ON state).

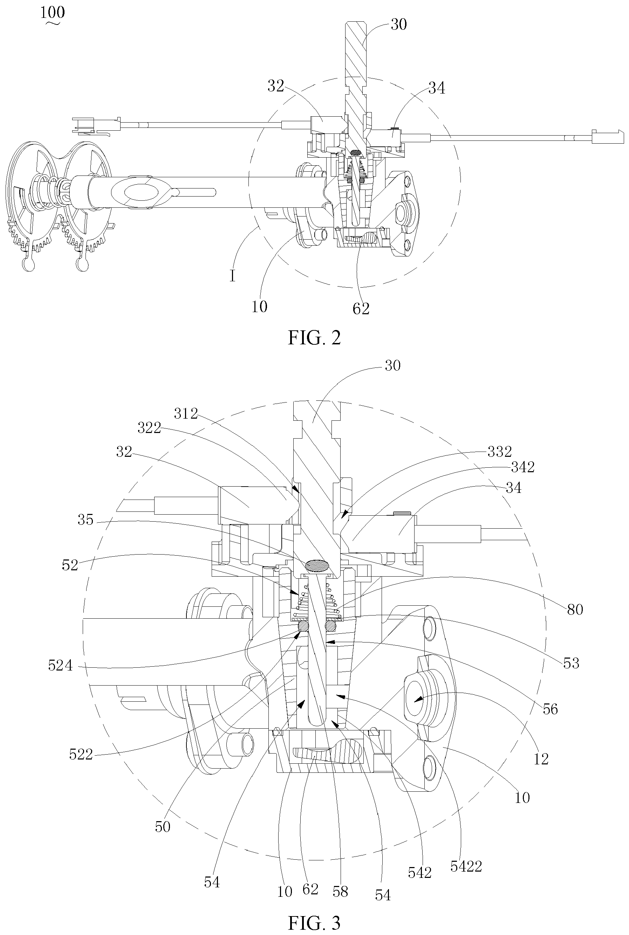

Referring to FIG. 3, in this embodiment, the first switch 32 can be a sensitive ignition switch, and the second switch 34 can be a sensitive detection switch. In some embodiments, under the normal circumstance, the sensitive ignition switch may be in the normally OFF state, and the sensitive detection switch may be in the ON state. That is, the normally OFF state of the sensitive ignition switch indicates that the sensitive ignition switch may output no signal to a control panel of the household appliance, or it may output an output signal indicating that the sensitive ignition switch is in the normally OFF state (e.g., a low level signal); and the ON state of the sensitive detection switch indicates that a signal (e.g., a high level signal) is outputted by the sensitive detection switch to the control panel of the household appliance or no signal is outputted from the sensitive detection switch (different naming methods can be predetermined). In this case, the household appliance can recognize that the plug valve 100 is in the closed state. The first switch 32 includes the first trigger terminal 322 penetrating the first space 222, and the second switch 34 includes the second trigger terminal 342 penetrating the second space 224. The first switch 32 can output a first electrical signal when the first trigger terminal 322 is triggered, and the second switch 34 can output a second electrical signal when the second trigger terminal 342 is triggered. In this embodiment, the first trigger terminal 322 can be a trigger terminal of the sensitive ignition switch, and the second trigger terminal 342 can be a trigger terminal of the sensitive detection switch.

In such an embodiment, the first state of the first switch 32 corresponds to the normally OFF state of the first switch 32, the third state of the first switch 32 corresponds to the ON state of the first switch 32, the second state of the second switch 34 corresponds to the ON state of the second switch 34, and the fourth state of the second switch 34 corresponds to the normally OFF state of the second switch 34. Then, after ignition of the sensitive ignition switch is completed, the sensitive detection switch may be in the normally OFF state. The normally OFF state of the sensitive detection switch may correspond to the open state of the plug valve 100, and the ON state of the sensitive detection switch may correspond to the closed state of the plug valve 100. When the plug valve 100 is in the closed state, the plug valve 100 prevents a fluid from passing through the plug valve 100, and when the plug valve 100 is in the open state, the plug valve 100 allows the fluid to pass through the plug valve 100. The fluid can include a liquid and a gas. In other embodiments, the states of the switch and the states of the plug valve 100 may be defined and named in other ways.

Along an axial direction C of the valve stem 30, the upper trigger surface 312 and the lower trigger surface 314 are sequentially provided from top to bottom. When the plug valve 100 is in the closed state, the upper trigger surface 312 is separated from the first trigger terminal 322 of the first switch 32 and the first switch 32 is in the normally OFF state, and the lower trigger surface 314 abuts the second trigger terminal 342 of the second switch 34 and the second switch 34 is in the ON state. When the plug valve 100 is in the open state, according to different working conditions, the upper trigger surface 312 abuts or separates from the first trigger terminal 322 of the first switch 32, and the lower trigger surface 314 abuts or separates from the second trigger terminal 322 of the second switch 34. It should be noted that the term "separate" mentioned herein may refer to a physical separation, or it may refer to that the trigger surface and the trigger terminal are in contact with each other, but such a contact cannot enable the trigger surface to trigger the trigger terminal, and further, to change a state of the switch. The term "abut" mentioned herein refers to that the trigger surface directly abuts the trigger terminal in such a manner that the state of the switch can be changed and maintained. The trigger surface directly abutting the trigger terminal means that no other structural members exist between the trigger surface and the trigger terminal.

Under the normal circumstance, the first switch 32 is in the third state, and the second switch 34 is in the fourth state. In the embodiments of the present invention, under the normal circumstance, the first switch 32 may be in the normally OFF state, and the second switch 34 may be in the ON state.

When the valve stem 30 is pressed (the user can press the valve stem 34 by means of an operation key (not illustrated) mounted on the top of the valve stem 34), the upper trigger surface 312 can abut the first trigger terminal 322 to enable the first switch 32 to be in the first state. In the embodiments of the present invention, certain actions of the household appliance, e.g., ignition of a fuel gas appliance, can be triggered by the first switch 32 in the ON state.

In this case, the lower trigger surface 314 is separated from the second trigger terminal 342 to enable the second switch 34 to be in the second state, i.e., to enable the second switch 34 to be in the normally OFF state in the embodiments of the present disclosure. When the valve stem 30 is released from pressing, the upper trigger surface 312 is separated from the first trigger terminal 322 to enable the first switch 32 to be in the third state, i.e., to enable the first switch 32 to be in the normally OFF state in the embodiments of the present invention. That is, by converting the first switch 32 from the initial ON state to the normally OFF state, certain actions of the household appliance can be triggered, e.g., triggering a pause of the ignition of the fuel gas appliance.

According to different working conditions, the lower trigger surface 314 can have two different states. That is, the lower trigger surface 314 may be kept being separated from the second trigger terminal 342 to enable the second switch 34 to be in the second state, corresponding to the open state of the plug valve 100 (i.e., a state after ignition of the plug valve 100 and a rotation of the valve stem 30); or the lower trigger surface 314 may abut the second trigger terminal 342, such that the second switch 34 can be in the fourth state (i.e., a position of the plug valve 100 before the ignition).

In this way, through combinations of different states of the two switches, the plug valve 100 can be developed with more functions. For example, the recognition of the valve state of the plug valve 100 can be collocated with a valve state prompting at the end of timing of the gas stove and added with a ventilator-stove linkage function, etc., and the present disclosure is not limited in this regard.

In some embodiments, the upper trigger surface 312 is a plane and/or the lower trigger surface 314 is a plane. In this way, by designing the upper trigger surface 312 and the lower trigger surface 314 as planes, the processing thereof is more convenient and simpler.

Specifically, referring to FIG. 2, FIG. 3, and FIG. 5, in this embodiment, both the upper trigger surface 312 and the lower trigger surface 314 are planes. Actions of the plug valve 100 and the valve state can be recognized based on a contact state between the upper trigger surface 312 and the first trigger terminal 322 and a contact state between the lower trigger surface 314 and the second trigger terminal 342, respectively. When the upper trigger surface 312 and the lower trigger surface 314 are both planes, the processing of the trigger surface 31 that is axially spaced apart from the valve stem 30 may be more convenient and simpler, and the user can easily conduct the daily cleaning and maintenance of the trigger surface 31, thereby greatly improving the user's use experience. In other embodiments, either the upper trigger surface 312 or the lower trigger surface 314 may be a plane, and the present invention is not limited in this regard.

In some embodiments, the valve stem 30 has a snapping block 35 protruding from a bottom thereof, the valve seat 20 has a regulating surface 21 provided in a bottom thereof, and a snapping groove 23 defined in the bottom thereof, and the snapping block 35 is located in the snapping block 23 to limit rotations of the valve stem 30. When the valve stem 30 is pressed, the snapping block 35 leaves the snapping groove 23 to remove a limitation on the rotation of the valve stem 30. When the valve stem 30 is rotated, the snapping block 35 is located on the regulating surface 21. When the valve stem 30 is released from pressing, the snapping block 35 is located on the regulating surface 21, or the snapping block 35 is located in the snapping groove 23.

In this manner, the valve stem 30 can be in different motion states under different states of the snapping block 35, such that the plug valve 100 can be configured with different functions.

Specifically, referring to FIG. 3 and FIG. 4, the valve stem 30 penetrates and is disposed in the mounting column 22 of the valve seat 20, and the snapping block 35 at the bottom of the valve stem 30 can be located on the regulating surface 21 or in the snapping groove 23 at the bottom of the valve seat 20. The regulating surface 21 may be a smooth plane. When the snapping block 35 is located on the regulating surface 21, since the regulating surface 21 is a smooth plane, the snapping block 35 can move on the regulating surface 21 with the rotation of the valve stem 30 to regulate a flow of a fluid, e.g., a quantity of gas flow. When the snapping block 35 is located in the snapping groove 23, a shape of the snapping groove 23 can be designed to match the snapping block 35. The snapping groove 23 can restrict the rotation of the snapping block 35, thereby preventing the valve stem 30 from rotating.

In an example, when the valve stem 30 is pressed, the snapping block 35 is released from the restriction of the snapping groove 23, such that the valve stem 30 can rotate, and at the same time, the upper trigger surface 312 of the valve stem 30 can abut the first trigger terminal 322, and the lower trigger surface 314 is separated from the second trigger terminal 342. In this case, the first switch 32 of the plug valve 100 is in the first state, and the second switch 34 of the plug valve 100 is in the second state. When the valve stem 30 is released from pressing, under different working conditions, the snapping block 35 may be located on the regulating surface 21 to enable the valve stem 30 to rotate, such that the upper trigger surface 312 can be separated from the first trigger terminal 322. In this case, the first switch 32 of the plug valve 100 is in the third state, the lower trigger surface 314 can remain separated from the second trigger terminal 342, and the second switch 34 is in the second state. The snapping block 35 may also be located in the snapping groove 23 to limit the rotation of the valve stem 30, and the lower trigger surface 314 can abut the second trigger terminal 342. In this case, the second switch 34 of the plug valve 100 is switched into the fourth state.

In some embodiments, the snapping block 35 can be used as a positioning latch, and the snapping groove 23 can also be used as a child lock groove to prevent safety problems caused by faulty operations of children.

In some embodiments, referring to FIG. 2, FIG. 3, and FIG. 6, a height difference L1 between a bottom surface 232 of the snapping groove 23 and the regulating surface 21 is smaller than a distance, by which the upper trigger surface 312 moves downwardly to abut the first trigger terminal 322 when the valve stem 30 is pressed; and the height difference L1 between the bottom surface 232 of the snapping groove 23 and the regulating surface 21 is greater than a distance, by which the lower trigger surface 314 moves downwardly to leave the second trigger terminal 342 when the valve stem 30 is pressed. In this manner, with the height difference L1 between the bottom surface 232 of the snapping groove 23 and the regulating surface 21, the upper trigger surface 312 can trigger the first trigger terminal 322 when the snapping block 35 leaves the snapping groove 23. In this way, when the snapping block 35 is on the regulating surface 21, the lower trigger surface 314 can be separated from the second trigger terminal 342.

Specifically, when the valve stem 30 is pressed, the snapping block 35 first leaves the snapping groove 23, and the valve stem 30 is in a rotatable state. When the valve stem 30 is further pressed to the maximum extent, the upper trigger surface 312 can trigger the first trigger terminal 322 to change the state of the first switch 32, so as to implement some actions of the household appliance, such as an ignition action. When the valve stem 30 is pressed to the maximum extent, the valve stem 30 can be rotated until the snapping block 35 is located below the regulating surface 21. When the valve stem 30 is released from pressing, the valve stem 30 may move upwards until the snapping block 35 of the valve stem 30 falls onto the regulating surface 21 of the valve seat 20. During the upward movement of the valve stem 30, in comparison with a case that the plug valve 100 is in the closed state, the upper trigger surface 312 moves downwardly by the height difference L1 between the bottom surface 232 of the snapping groove 23 and the regulating surface 21. However, the first switch 32 is converted from the ON state to the normally OFF state and then returns to the normally OFF state, since a distance, by which the upper trigger surface 312 moves downwardly to abut the first trigger terminal 322, is far greater than the height difference L1, i.e., in this case, the distance, by which the upper trigger surface 312 moves downwards, is far smaller than a distance sufficient to trigger the contact between the upper trigger surface 312 and the first trigger terminal 322.

In comparison with a case that the plug valve 100 is in the closed state, the lower trigger surface 314 moves downwardly by the height difference L1 between the bottom surface 232 of the snapping groove 23 and the regulating surface 21. However, since a distance, by which the lower trigger surface 314 moves downwardly to leave the second trigger terminal 342, is much smaller than the height difference L1, i.e., in this case, the distance, by which the lower trigger surface 314 moves downwardly, is a distance that enables the lower trigger surface 314 to leave the second trigger terminal 342, the second switch 34 continues maintaining the normally OFF state.

In some embodiments, the plug valve 100 includes a protruding portion 40 disposed on the regulating surface 21. The protruding portion 40 and the snapping groove 23 together are configured to limit a rotation angle range of the valve stem 30. In this manner, by providing the protruding portion 40 and the snapping groove 2, a rotation angle range of the plug valve 100 can be limited within a certain extent.

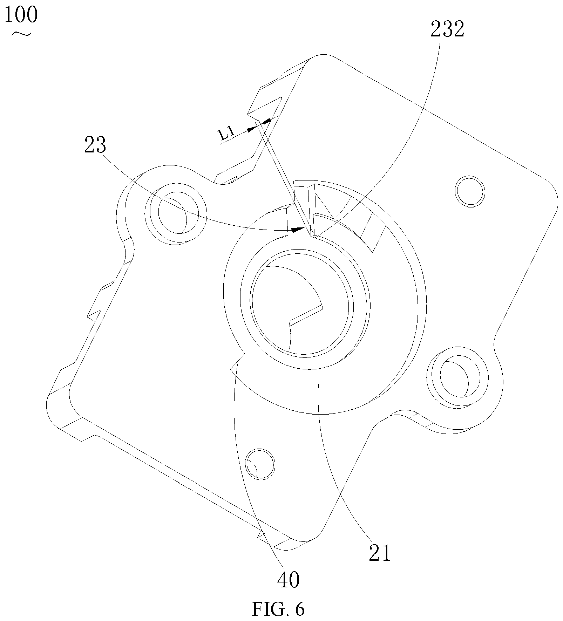

Specifically, referring to FIG. 6, the protruding portion 40 is disposed on the regulating surface 21 of the valve seat 20, and has a certain height difference from the regulating surface 21. When the plug valve 100 is in the closed state, the snapping block 35 of the valve stem 30 may fall into the snapping groove 23 to restrict the rotation of the valve stem 30. When the plug valve 100 is in the open state, the snapping block 35 of the valve stem 30 may fall onto the snapping groove 23, allowing the valve stem 30 to rotate. During the rotation of the valve stem 30, i.e., when the snapping block 35 moves on the regulating surface 21, due to the protruding portion 40 on the regulating surface 21, the snapping block 35 is in contact with the protruding portion 40 to limit the movement of the snapping block 35, thereby limiting the rotation angle range of the valve stem 30. In some embodiments, the rotation angle range of the valve stem 30 is a range of 180 degrees.

In certain embodiments, referring to FIG. 3, FIG. 7, and FIG. 8, the plug valve 100 includes a valve core 50, a valve core needle 58, a toggle lever 60, and a third switch 70. The valve core 50 and the toggle lever 60 are located in the body 10. The valve stem 30 is capable of driving the valve core 50 to rotate synchronously. The third switch 70 is connected to the body 10. The valve core needle 58 is connected to the valve stem 30 and penetrates the valve core 50. When the valve stem 30 is pressed, the valve stem 30 drives, through the valve core needle 58, the toggle lever 60 to rotate for triggering the third switch 70. In this manner, the toggle lever 60 is driven by the valve stem 30 to trigger the third switch 70.

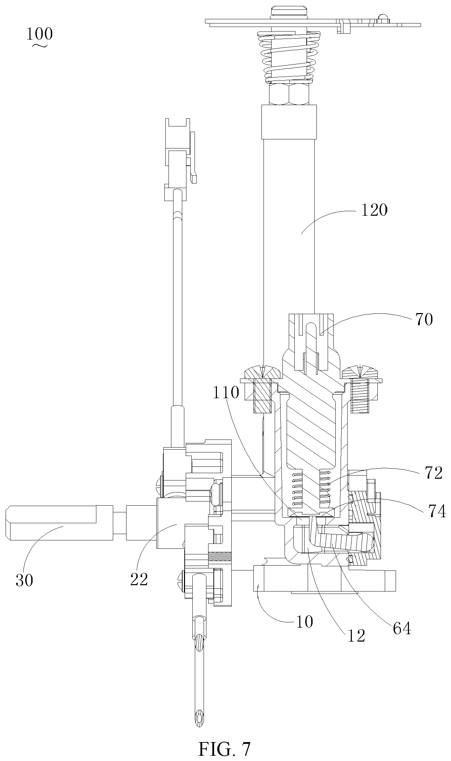

Specifically, referring to FIG. 3 and FIG. 7, the body 10 of the plug valve 100 has a chamber defined therein, for mounting the valve core 50 and the toggle lever 60, and the third switch 70 is connected to the body 10. In this embodiment, the third switch 70 may be a solenoid valve. The third switch 70 may include an elastic member 72 and a sealing pad 74. The elastic member 72 is connected to the sealing pad 74 and can provide a force to the third switch 70 to control a trigger state of the third switch 70. The sealing pad 74 may be connected to the toggle lever 60, and the sealing pad 74 is configured to seal or expose a fluid perforation hole 110 inside the body 10.

In some embodiments, the plug valve 100 can be applied in fuel gas appliances, and the body is installed with a gas outlet pipe 120 connected to a burner, and a gas inlet pipe (not illustrated) connected to a gas source. When the sealing pad 74 of the third switch 70 exposes the fluid perforation hole 110, gas in the gas inlet pipe is allowed to enter the plug valve 100 through the fluid perforation hole 110, and then enter the gas outlet pipe 120 for use by the burner. When the sealing pad 74 of the third switch 70 seals the fluid perforation hole 110, the gas in the gas inlet pipe can be blocked from entering the plug valve 100, thereby stopping supplying gas to the burner.

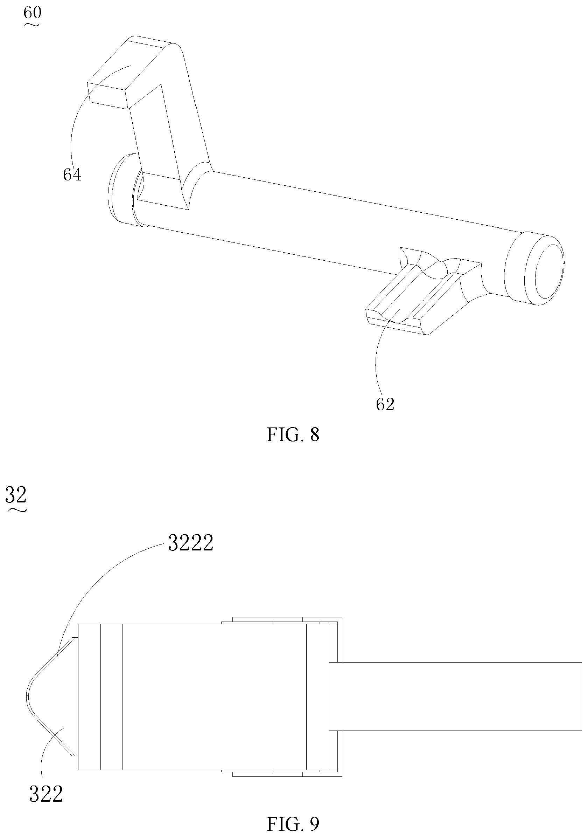

The valve core needle 58 is provided inside the valve core 50. The valve core needle 58 can be connected to the valve stem 30 and penetrates the valve core 50. The snapping block 35 of the valve stem 30 can cooperate with the valve core needle 58. The valve stem 30 simultaneously drives the valve core 50 and the valve core needle 58 to rotate synchronously. Referring to FIG. 8, in addition, the toggle lever 60 includes a toggle member 62, a lever body 63, and a toggle lever bend 64. The toggle member 62 and the toggle lever bend 64 can be arranged in a circumferential direction of the lever body 63 and staggered by a certain angle. A position of the toggle member 62 corresponds to a position of the valve core needle 58. When the valve core needle 58 moves downwards, a bottom of the valve core needle 58 can press the toggle member 62 to enable the toggle lever 60 to rotate as a whole, so as to drive the toggle lever bend 64 to rotate. During the rotation of the toggle lever bend 64, the third switch 70 can be triggered, e.g., the sealing pad can be pushed away. Further, the toggle member 62 has a toggle lever groove 621 defined in a surface thereof facing towards the valve core needle 58, and the toggle lever groove 621 can be configured to partially accommodate the bottom of the valve core needle 58 to ensure reliability when the valve core needle 58 drives the toggle lever 60 to rotate.

In an example, when the valve stem 30 is pressed, the first trigger terminal 322 is abutted by the upper trigger surface 312 to switch the first switch 32 to the ON state; and the second trigger terminal 342 leaves the lower trigger surface 314 to switch the second switch 34 to the normally OFF state. The valve stem 30 pushes the valve core needle 58 to move down vertically, and thus the valve core needle 58 exerts a force on the toggle lever groove 621 to drive the toggle lever 60 to rotate as a whole, thereby driving the toggle lever bend 64 to rotate. In this way, the toggle lever bend 64 can push the sealing pad 74 of the third switch 70 upwardly. Then, when the valve stem 30 is pressed to the bottom, the sealing pad 74 transfers the force exerted by the toggle lever bend 64 to the elastic member 72, and the elastic member 72 further provides a force to the third switch 70, thereby triggering the third switch 70. That is, when the sealing pad 74 reaches a position where it can be attracted by the solenoid valve, the third switch 70 is triggered, and thus the fluid perforation hole 110 is opened.

In some embodiments, the plug valve 100 includes a valve core needle spring 80 sleeved on the valve core needle 58 and configured to drive, when the valve stem 30 is released from pressing, the valve stem 30 to move. In this case, under a force of the valve core needle spring 80, the valve stem 30 can be driven to move upwards, thereby changing an action of the plug valve 100.

Specifically, referring to FIG. 3, the valve core needle spring 80 is sleeved on the valve core needle 58 along a circumferential direction of the valve core needle 58 and located at the bottom of the valve stem 30. With an interaction between the valve core needle spring 80 and the valve stem 30, the valve core needle 58 can move up and down inside the valve core 50. In an example, when the valve stem 30 is released from pressing, a compressive elastic force of the valve core needle spring 80 may act on the bottom of the valve stem 30 to move the valve stem 30 upwardly, and the valve stem 30 can drive the valve core needle 58 to move upwardly, until the snapping block 35 of the valve stem 30 falls onto the regulating surface 21 of the valve seat 20, in which the upper trigger surface 312 is separated from the first trigger terminal 322 of the first switch 32 to switch the first switch 32 into the third state, i.e., returning to the initial normally OFF state; or until the snapping block 35 of the valve stem 30 falls in the snapping groove 23 of the valve seat 20, in which the upper trigger surface 312 is separated from the first trigger terminal 322 of the first switch 32 to switch the first switch 32 into the third state, i.e., returning to the initially normally OFF state. In this manner, under the force of the valve core needle spring 80, the valve stem 30 can be driven to move upwards, thereby changing the action of the plug valve 100.

In some embodiments, referring to FIG. 3, the valve core 50 has a first chamber 52, a second chamber 54, and a valve core perforation hole 56 communicating the first chamber 52 with the second chamber 54. The valve core needle spring 80 is located in the first chamber 52. The plug valve 100 includes a sealing member 524 located in the first chamber 52. The valve core needle 58 penetrates and is disposed in the first chamber 52, the valve core perforation hole 56, and the second chamber 54. The valve core needle spring 80 is configured to tightly press the sealing member 524, allowing the sealing member 524 to seal a gap between the valve core needle 58 and the valve core perforation hole 56. In this case, the sealing member 524 can tightly seal the gap between the valve core needle 58 and the valve core perforation hole 56 to prevent the plug valve 100 from leaking gas or liquid.

Specifically, the valve core perforation hole 56 can communicate the first chamber 52 with the second chamber 54, such that the valve core needle 58 can extend from the first chamber 52 into the second chamber 54. In this embodiment, the valve core needle spring 80 and the sealing member 524 are provided in the first chamber 52. When the valve stem 30 is pressed, the sealing member 524 can be tightly pressed by the valve core needle spring 80 and thus can tightly seal the gap between the valve core needle 58 and the valve core perforation hole 56, thereby preventing the plug valve 100 in the open state from leaking gas or liquid. In addition, the sealing member 524 is located in the first chamber 52, and the valve core needle 58 penetrates the first chamber 52, the valve core perforation hole 56, and the second chamber 54, thereby reducing a space occupied by internal components of the plug valve 100 and allowing the plug valve 100 to be more compact.

In addition, the sealing member 524 can be fabricated into a form of a sealing ring to create 360 degrees sealing. The sealing member 524 may be made of rubber, silicone, or other sealing materials. In this embodiment, the sealing member 524 may be an O-shaped sealing ring.

In certain embodiments, the plug valve 100 includes a gasket 53 located between the valve core needle spring 80 and the sealing member 524. In this case, the valve core needle spring 80 can provide a more uniform pressing force.

Specifically, an upper surface and a lower surface of the gasket 53 may be planar. One end of the valve core needle spring 80 abuts the upper surface of the gasket 53, and the lower surface of the gasket 53 abuts the sealing member 524. Thus, when the valve core needle spring 80 provides the pressing force to the sealing member 524, the upper and lower planes of the gasket 53 can provide the pressing force to the sealing member 524 in a more even manner to enable forces exerted on different positions of the sealing member 524 to be basically the same, thereby providing uniform and good sealing performance.

In some embodiments, the first chamber 52 has a mounting groove 522 defined on a bottom surface thereof, and the sealing member 524 is at least partially located in the mounting groove 522. In this case, on the one hand, mounting of the sealing member 524 can be facilitated, and on the other hand, the sealing performance of the sealing member 524 can be improved.

Specifically, referring to FIG. 3, by providing the mounting groove 522, the sealing member 524 can seal the gap between the valve core needle 58 and the valve core perforation hole 56, which, on the one hand, ensures a good sealing effect of the sealing member 524, and on the other hand, make mounting and positioning of the sealing member 524 more stable, thereby avoiding a displacement of the sealing member 524 during a mounting process, which may cause an unnecessary influence on the sealing performance of the plug valve 100.

In this embodiment, a cross-sectional shape of the mounting groove 522 may be a square, and in other embodiments, the cross-sectional shape of the mounting groove 522 may also be an arc or other shapes, and the present disclosure is not limited to any of these examples. It should be noted that a size of the mounting groove 522 matches that of the sealing member 524. That is, the cross-sectional shape of the mounting groove 522 can be specifically designed to match a cross-sectional shape of the sealing member 524. The sealing member 524 can tightly seal the gap between the valve core needle 58 and the valve core perforation hole 56 to prevent a fluid from flowing into, through the gap between the valve core needle 58 and the valve core perforation hole 56, the first chamber 52 from the second chamber 54, or flowing into, through the gap between the valve core needle 58 and the valve core perforation hole 56, the second chamber 54 from the first chamber 52.

In some embodiments, an inner wall 542 of the second chamber 54 has a fluid through hole 5422 defined therein. The body 10 has a fluid channel 12 defined therein. When the valve stem 30 drives the valve core 50 to rotate, the fluid channel 12 can be in communication with or interrupted from the fluid through hole 5422. In this case, the quantity of flow of the fluid can be controlled through a communication area between the fluid through hole 5422 and the fluid channel 12.

Specifically, referring to FIG. 3, the fluid channel 12 in the body 10 can be used for fluid transmission, such as gas transmission. The fluid through hole 5422 opened in the inner wall 542 of the second chamber 54 cooperates with the valve core 50, and the quantity of flow of the fluid is controlled based on the communication area between the fluid through hole 5422 and the fluid channel 12. For example, when the communication area between the fluid through hole 5422 and an outlet of the fluid channel 12 is zero, the fluid is blocked, and the plug valve 100 is in the closed state, such that the fluid cannot pass the plug valve 100. When the communication area between the fluid through hole 5422 and the outlet of the fluid channel 12 is greater than zero, the fluid can flow in, and through the rotation of the valve stem 30, a contact area between the fluid through hole 5422 and the outlet of the fluid channel 12 is adjusted for controlling of the quantity of flow of the fluid.

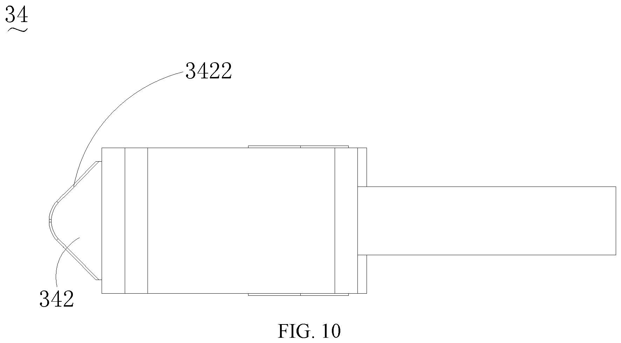

In some embodiments, referring to FIG. 9 and FIG. 10, the first trigger terminal 322 has a first inclined surface 3222 facing towards the upper trigger surface 312 and inclined away from an axial direction C of the valve stem 30, and the second trigger terminal 342 has a second inclined surface 3422 facing towards the lower trigger surface 314 and inclined away from the axial direction C of the valve stem 30. In this case, the trigger terminal and the trigger surface 31 can be contacted with each other quickly, such that actions and state recognition of the plug valve 100 are more sensitive and reliable. In addition, it is unnecessary to re-process a shape of the trigger terminal, thereby improving the production efficiency.

Generally speaking, the two sides of the trigger terminal are both the planes with a certain inclination angle. For the single trigger groove 31, the trigger terminal having inclined surfaces can be effectively and accurately triggered by the trigger surface, without the need to re-process the shape of the trigger terminal, thereby saving production costs of the plug valve 100 and improving the production efficiency of the plug valve 100. Specifically, when the valve stem 30 is pressed, the upper trigger surface 312 abuts the first inclined surface 3222 of the first trigger terminal 322, and compared to a horizontal plane, the certain inclination angle of the first inclined surface 3222 allows the upper trigger surface 3222 to quickly contact the first trigger terminal 322, such that the first switch 32 can be triggered sensitively. Similarly, the lower trigger surface 314 abuts the second inclined surface 3422 of the second trigger terminal 342, and compared to a horizontal plane, the certain inclination angle of the second inclined surface 3422 allows the lower trigger surface 314 to contact the second trigger terminal 342 more quickly, such that the second switch 34 can be triggered sensitively.

In certain embodiments, referring to FIG. 4, the plug valve 100 further includes a first fastening member 28 and a second fastening member 29. The valve seat 20 has a first protrusion 24, a second protrusion 25, a first fixation hole 328, and a second fixation hole 348. The first switch 32 has a first recess and a first mounting hole. The second switch 34 has a second recess and a second mounting hole. The first protrusion 24 is located in the first recess. The first fastening member 28 penetrates the first mounting hole and is connected to a hole wall of the first mounting hole 328 to fix the first switch 32. The second protrusion 25 is located in the second recess. The second fastening member 29 penetrates the second mounting hole and is connected to a hole wall of the second fixation hole 348 to fix the second switch 34. In this way, the first switch 32 and the second switch 34 are securely fixed to the valve seat 20.

Specifically, the first fixation hole 328 and the second fixation hole 348 may be fixation holes on two opposite sides of the mounting column 22. The first fastening member 28 may be connected to the hole wall of the first fixation hole 328 to fix the first switch 32; and the second fastening member 29 can be connected to the hole wall of the second fixation hole 348 to fix the second switch 34. By means of a tight connection between the fastening member and the fixation hole, the mounting of the valve seat 20 can be more stable and reliable, thereby preventing some parts of the plug valve 100 from falling apart during the use of the user. In this embodiment, the fastening member may be a screw, a screw nail, a pin, etc., or other fastening members, and the present invention is not limited to any of these examples. The fixation hole may be a screw hole or the like.

In an embodiment, when the plug valve 100 is in the closed state, the upper trigger surface 312 is separated from the first trigger terminal 322, the lower trigger surface 314 is separated from the second trigger terminal 342, the first switch 32 is in the normally OFF state, and the second switch 34 is in the ON state. When the valve stem 30 is pressed to the bottom and rotated to an angle allowing the maximum flow, the upper trigger surface 312 of the valve stem 30 pushes against the first trigger terminal 322 of the first switch 32, such that the first switch 32 can be converted from the normally OFF state to the ON state; and the lower trigger surface 314 of the valve stem 30 leaves the second trigger terminal 342 of the second switch 34, such that the second switch 34 can be converted from the ON state to the normally OFF state. When the valve stem 30 is released (from pressing), the valve stem 30 moves upwards under the force of the valve core needle spring 80 and falls onto the regulating surface 21 at the bottom of the valve seat 20. In this case, the upper trigger surface 332 of the valve stem 30 is distanced from the first trigger terminal 322 of the first switch 32, such that the first switch 32 can return to the normally OFF state again; and the lower trigger surface 314 of the valve stem 30 remains to be separated from the second trigger terminal 342 of the second switch 34, such that the second switch 34 can be kept in the normally OFF state and constantly maintain the normally OFF state when the plug valve 100 adjusts the quantity of flow of the fluid, until the plug valve 100 returns to the closed state. Then, the snapping block 35 of the valve stem 30 falls into the snapping groove 23, and the valve stem 30 moves upwards by a certain distance, such that the lower trigger surface 314 also moves upwards by a certain distance and thus leaves the second trigger terminal 342 of the second switch 34, then the second switch 34 returns to the ON state.

A household appliance according to an embodiment of the present invention includes the plug valve 100 according to any of the above embodiments.

In the above household appliance, by providing two switches, different states of the two switches can be combined with each other to provide more functional applications for meeting more demands. In addition, by providing one single trigger groove 31 on the valve stem 30 to form a corresponding trigger structure, the processing requirements for the valve stem 30 can be simplified, thereby bringing higher and more reliable production efficiency.

Specifically, the household appliance includes, but is not limited to, a fuel gas appliance (such as a gas stove and a gas heater), a washing machine, a dishwasher, a water dispenser, a water purifier, and another household appliance that requires a control of a quantity of flow. Under the control of the plug valve 100, the household appliance can recognize different working states of the plug valve 100 based on combinations of the different states of the first switch 32 and the second switch 34. In addition, for example, the recognition of the valve state of the plug valve 100 can be collocated with a valve state prompting at the end of timing of the gas stove and added with a ventilator-stove linkage function.

In the specification, descriptions with reference to the terms "an embodiment", "some embodiments", "illustrative embodiments", "an example", "a specific example", "some examples", etc., mean that specific features, structure, materials or characteristics described in conjunction with the embodiment or example are included in at least one embodiment or example of the present invention In this specification, the schematic representations of the above terms do not necessarily refer to the same embodiment or example. Moreover, the described specific features, structures, materials or characteristics may be combined in any one or more embodiments or examples in a suitable manner.

## Claims

1. A plug valve (100), comprising:
a body (10);
a valve seat (20) mounted on the body (10) and having a hollow mounting column (22) provided thereon, the mounting column (22) having a first space (222) and a second space (224) that are defined in a circumferential sidewall thereof;
a valve stem (30) disposed on the valve seat (20) and penetrating the mounting column (22), wherein the valve stem (30) has one trigger groove (31) defined in an outer peripheral surface thereof, and the trigger groove (31) comprises an upper trigger surface (312) and a lower trigger surface (314);
a first switch (32) mounted on the valve seat (20) and comprising a first trigger terminal (322) penetrating the first space (222); and
the second switch (34) mounted on the valve seat (20) and comprising a second trigger terminal (342) penetrating the second space (224),
wherein the plug valve (100) is configured in a manner that:
when the valve stem (30) is pressed, the first trigger terminal (322) is triggered by the upper trigger surface (312) to enable the first switch (32) to be in a first state, and the second trigger terminal (342) is triggered by the lower trigger surface (314) to enable the second switch (34) to be in a second state; and
when the valve stem (30) is released from pressing, the first trigger terminal (322) is triggered by the upper trigger surface (312) to enable the first switch (32) to be in a third state, and the lower trigger surface (314) enables the second switch (34) to be kept in the second state or the second trigger terminal (342) is triggered by the lower trigger surface (314) to enable the second switch (34) to be in a fourth state.

2. The plug valve (100) according to claim 1, wherein the upper trigger surface (312) is a plane, and/or the lower trigger surface (314) is a plane.

3. The plug valve (100) according to claim 1, wherein the first space (222) and the second space (224) are partially opposite to each other in a predetermined direction, and the predetermined direction comprises a vertical direction.

4. The plug valve (100) according to claim 1, wherein each of the first space (222) and the second space (224) comprises a through hole.

5. The plug valve (100) according to claim 1, wherein the first switch (32) is in a normally OFF state under a normal circumstance, and the second switch (34) is in an ON state under the normal circumstance.

6. The plug valve (100) according to claim 1, wherein the valve stem (30) has a snapping block (35) protruding from a bottom thereof, the valve seat (20) has a regulating surface (21) and a snapping groove (23) that are defined in the bottom thereof, and the snapping block (35) is located in the snapping block (35) to limit a rotation of the valve stem (30), wherein
when the valve stem (30) is pressed, the snapping block (35) leaves the snapping groove (23) to remove a limitation on the rotation of the valve stem (30);
when the valve stem (30) is rotated, the snapping block (35) is located on the regulating surface (21); and
when the valve stem (30) is released from pressing, the snapping block (35) is located on the regulating surface (21), or the snapping block (35) is located in the snapping groove (23).

7. The plug valve (100) according to claim 6, wherein a height difference between a bottom surface (232) of the snapping groove (23) and the regulating surface (21) is smaller than a distance, by which the upper trigger surface (312) moves downwardly to abut the first trigger terminal (322) when the valve stem (30) is pressed; and
the height difference between the bottom surface (232) of the snapping groove (23) and the regulating surface (21) is greater than a distance, by which the lower trigger surface (314) moves downwardly to leave the second trigger terminal (342) when the valve stem (30) is pressed.

8. The plug valve (100) according to claim 6, further comprising a protruding portion (40) disposed on the regulating surface (21), wherein the protruding portion (40) and the snapping groove (23) together are configured to limit a rotation angle range of the valve stem (30).

9. The plug valve (100) according to claim 1, further comprising a valve core (50), a valve core needle (58), a toggle lever (60), and a third switch (70), wherein the valve core (50) and the toggle lever (60) are located in the body (10), the valve stem (30) is capable of driving the valve core (50) to rotate synchronously, the third switch (70) is connected to the body (10), the valve core needle (58) is connected to the valve stem (30) and is configured to penetrate the valve core (50), and the valve stem (30) is configured to drive, in response to the valve stem (30) being pressed, the toggle lever (60) through the valve core needle (58) to rotate for triggering the third switch (70).

10. The plug valve (100) according to claim 9, further comprising a valve core needle spring (80) sleeved on the valve core needle (58) and configured to drive, in response to the valve stem (30) being released from pressing, the valve stem (30) to move.

11. The plug valve (100) according to claim 10, wherein the valve core (50) has a first chamber (52), a second chamber (54), and a valve core perforation hole (56) communicating the first chamber (52) with the second chamber (54),
the valve core needle spring (80) is located in the first chamber (52); the plug valve (100) further comprises a sealing member (524) located in the first chamber (52); the valve core needle (58) is configured to penetrate the first chamber (52), the valve core perforation hole (56), and the second chamber (54); and the valve core needle spring (80) is configured to tightly press the sealing member (524) to seal a gap between the valve core needle (58) and the valve core perforation hole.

12. The plug valve according to claim 11, further comprising a gasket (53) located between the valve core needle spring (80) and the sealing member (524), or, wherein the first chamber (52) has a mounting groove (522) defined on a bottom surface (232) thereof, and the sealing member (524) is at least partially located in the mounting groove (522).

13. The plug valve (100) according to claim 1, wherein the first trigger terminal (322) has a first inclined surface (3222) facing towards the upper trigger surface (312) and inclined away from an axial direction of the valve stem (30), and the second trigger terminal (342) has a second inclined surface (3422) facing towards the lower trigger surface (314) and inclined away from the axial direction of the valve stem (30).

14. The plug valve according to claim 1, further comprising a first fastening member (28) and a second fastening member (29), wherein the valve seat (20) has a first protrusion (24), a second protrusion (25), a first fixation hole (26, 328), and a second fixation hole (27, 348) that are provided on the valve seat (20); the first switch (32) has a first recess and a first mounting hole; the second switch (34) has a second recess and a second mounting hole; the first protrusion (24) is located in the first recess; the first fastening member (28) is configured to penetrate the first mounting hole and is connected to a hole wall of the first mounting hole to fix the first switch (32); the second protrusion (25) is located in the second recess; and the second fastening member (29) is configured to penetrate the second mounting hole and is connected to a hole wall of the second fixation hole (27, 348) to fix the second switch (34).

15. A household appliance, comprising the plug valve (100) according to any one of claims 1 to 13, optionally comprising a fuel gas appliance.

## Patentansprüche

1. Kegelventil (100), umfassend:
einen Hauptteil (10),
einen Ventilsitz (20), der an den Hauptteil (10) montiert ist und eine daran bereitgestellte hohle Montagesäule (22) aufweist, wobei die Montagesäule (22) einen ersten Raum (222) und einen zweiten Raum (224) aufweist, die in einer umlaufenden Seitenwand von ihr definiert sind,
einen Ventilschaft (30), der auf dem Ventilsitz (20) angeordnet ist und in die Montagesäule (22) eindringt, wobei der Ventilschaft (30) eine Auslöserille (31) aufweist, die in einer äußeren Umfangsfläche von ihm definiert ist, und die Auslöserille (31) eine obere Auslösefläche (312) und eine untere Auslösefläche (314) umfasst,
einen ersten Schalter (32), der an dem Ventilsitz (20) montiert ist und einen ersten Auslöseanschluss (322) umfasst, der in den ersten Raum (222) eindringt, und
den zweiten Schalter (34), der an dem Ventilsitz (20) montiert ist und einen zweiten Auslöseanschluss (342) umfasst, der in den zweiten Raum (224) eindringt,
wobei das Kegelventil (100) in einer Art und Weise gestaltet ist, dass:
wenn auf den Ventilschaft (30) gedrückt wird, der erste Auslöseanschluss (322) durch die obere Auslösefläche (312) ausgelöst wird, um es dem ersten Schalter (32) zu ermöglichen, sich in einem ersten Zustand zu befinden, und der zweite Auslöseanschluss (342) durch die untere Auslösefläche (314) ausgelöst wird, um es dem zweiten Schalter (34) zu ermöglichen, sich in einem zweiten Zustand zu befinden, und
wenn das Drücken des Ventilschafts (30) gelöst wird, der erste Auslöseanschluss (322) durch die obere Auslösefläche (312) ausgelöst wird, um es dem ersten Schalter (32) zu ermöglichen, sich in einem dritten Zustand zu befinden, und die untere Auslösefläche (314) dem zweiten Schalter (34) ermöglicht, in dem zweiten Zustand zu bleiben, oder der zweite Auslöseanschluss (342) durch die untere Auslösefläche (314) ausgelöst wird, um es dem zweiten Schalter (34) zu ermöglichen, sich in einem vierten Zustand zu befinden.

2. Kegelventil (100) nach Anspruch 1, wobei die obere Auslösefläche (312) eine Ebene ist und/oder die untere Auslösefläche (314) eine Ebene ist.

3. Kegelventil (100) nach Anspruch 1, wobei der erste Raum (222) und der zweite Raum (224) in einer festgelegten Richtung einander teilweise gegenüberliegen und die festgelegte Richtung eine vertikale Richtung umfasst.

4. Kegelventil (100) nach Anspruch 1, wobei der erste Raum (222) und der zweite Raum (224) jeweils eine Durchgangsöffnung umfassen.

5. Kegelventil (100) nach Anspruch 1, wobei sich der erste Schalter (32) unter einer normalen Bedingung in einem normal ausgeschalteten Zustand befindet und sich der zweite Schalter (34) unter der normalen Bedingung in einem angeschalteten Zustand befindet.

6. Kegelventil (100) nach Anspruch 1, wobei der Ventilschaft (30) einen Rastblock (35) aufweist, der aus einem Boden von ihm hervorsteht, der Ventilsitz (20) eine Regulierungsfläche (21) und eine Rastrille (23) aufweist, die dem Boden von ihm definiert sind, und sich der Rastblock (35) in dem Rastblock (35) befindet, um eine Drehung des Ventilschafts (30) zu begrenzen, wobei
wenn auf den Ventilschaft (30) gedrückt wird, der Rastblock (35) die Rastrille (23) verlässt, um eine Begrenzung der Drehung des Ventilschafts (30) zu entfernen,
wenn der Ventilschaft (30) gedreht wird, sich der Rastblock (35) auf der Regulierungsfläche (21) befindet, und
wenn das Drücken des Ventilschafts (30) gelöst wird, sich der Rastblock (35) auf der Regulierungsfläche (21) befindet oder sich der Rastblock (35) in der Rastrille (23) befindet.

7. Kegelventil (100) nach Anspruch 6, wobei ein Höhenunterschied zwischen einer Bodenfläche (232) der Rastrille (23) und der Regulierungsfläche (21) kleiner als ein Abstand ist, um den sich die obere Auslösefläche (312) abwärts bewegt, um an dem ersten Auslöseanschluss (322) anzuliegen, wenn auf den Ventilschaft (30) gedrückt wird, und
der Höhenunterschied zwischen der Bodenfläche (232) der Rastrille (23) und der Regulierungsfläche (21) größer als ein Abstand ist, um den sich die untere Auslösefläche (314) abwärts bewegt, um den zweiten Auslöseanschluss (342) zu verlassen, wenn auf den Ventilschaft (30) gedrückt wird.

8. Kegelventil (100) nach Anspruch 6, ferner umfassend einen hervorstehenden Abschnitt (40), der auf der Regulierungsfläche (21) angeordnet ist, wobei der hervorstehende Abschnitt (40) und die Rastrille (23) zusammen dafür gestaltet sind, einen Drehwinkelbereich des Ventilschafts (30) zu begrenzen.

9. Kegelventil (100) nach Anspruch 1, ferner umfassend einen Ventilkern (50), eine Ventilkernnadel (58), einen Kipphebel (60) und einen dritten Schalter (70), wobei sich der Ventilkern (50) und der Kipphebel (60) in dem Hauptteil (10) befinden, der Ventilschaft (30) in der Lage ist, den Ventilkern (50) anzutreiben, sich synchron zu drehen, der dritte Schalter (70) mit dem Hauptteil (10) verbunden ist, die Ventilkernnadel (58) mit dem Ventilschaft (30) verbunden und dafür gestaltet ist, in den Ventilkern (50) einzudringen, und der Ventilschaft (30) dafür gestaltet ist, in Reaktion darauf, dass auf den Ventilschaft (30) gedrückt wird, den Kipphebel (60) über die Ventilkernnadel (58) anzutreiben, sich zu drehen, um den dritten Schalter (70) auszulösen.

10. Kegelventil (100) nach Anspruch 9, ferner umfassend eine Ventilkernnadelfeder (80) umfassend, die auf die Ventilkernnadel (58) aufgesetzt und dafür gestaltet ist, in Reaktion darauf, dass das Drücken des Ventilschafts (30) gelöst wird, den Ventilschaft (30) anzutreiben, sich zu bewegen.

11. Kegelventil (100) nach Anspruch 10, wobei der Ventilkern (50) eine erste Kammer (52), eine zweite Kammer (54) und eine Ventilkernperforationsöffnung (56), welche die erste Kammer (52) mit der zweiten Kammer (54) verbindet, aufweist,
wobei sich die Ventilkernnadelfeder (80) in der ersten Kammer (52) befindet, das Kegelventil (100) ferner ein Dichtungselement (524) umfasst, das sich in der ersten Kammer (52) befindet, die Ventilkernnadel (58) dafür gestaltet ist, in die erste Kammer (52), die Ventilkernperforationsöffnung (56) und die zweite Kammer (54) einzudringen, und die Ventilkernnadelfeder (80) dafür gestaltet ist, fest auf das Dichtungselement (524) zu drücken, um einen Spalt zwischen der Ventilkernnadel (58) und der Ventilkernperforationsöffnung abzudichten.

12. Kegelventil nach Anspruch 11, ferner umfassend einen Dichtungsring (53) umfassend, der sich zwischen der Ventilkernnadelfeder (80) und dem Dichtungselement (524) befindet, oder wobei die erste Kammer (52) eine Montagerille (522) aufweist, die in Bodenfläche von ihr definiert ist, und sich das Dichtungselement (524) zumindest teilweise in der Montagerille (522) befindet.

13. Kegelventil (100) nach Anspruch 1, wobei der erste Auslöseanschluss (322) eine erste geneigte Fläche (3222) aufweist, die zu der oberen Auslösefläche (312) weist und weg von einer axialen Richtung des Ventilschafts (30) geneigt ist, und der zweite Auslöseanschluss (342) eine zweite geneigte Fläche (3422) aufweist, die zu der unteren Auslösefläche (314) weist und weg von der axialen Richtung des Ventilschafts (30) geneigt ist.

14. Kegelventil nach Anspruch 1, ferner umfassend ein erstes Befestigungselement (28) und ein zweites Befestigungselement (29) umfassend, wobei der Ventilsitz (20) einen ersten Vorsprung (24), einen zweiten Vorsprung (25), eine erste Fixierungsöffnung (26, 328) und eine zweite Fixierungsöffnung (27, 348) aufweist, die an dem Ventilsitz (20) bereitgestellt sind, wobei der erst Schalter (32) eine erste Vertiefung und eine erste Montageöffnung aufweist, der zweite Schalter (34) eine zweite Vertiefung und eine zweite Montageöffnung aufweist, sich der erste Vorsprung (24) in der ersten Vertiefung befindet, das erste Befestigungselement (28) dafür gestaltet ist, in die erste Montageöffnung einzudringen, und mit einer Öffnungswand der ersten Montageöffnung verbunden ist, um den ersten Schalter (32) zu fixieren, sich der zweite Vorsprung (25) in der zweiten Vertiefung befindet und das zweite Befestigungselement (29) dafür gestaltet ist, in die zweite Montageöffnung einzudringen, und mit einer Öffnungswand der zweiten Fixierungsöffnung (27, 348) verbunden ist, um den zweiten Schalter (34) zu fixieren.

15. Haushaltsgerät, umfassend das Kegelventil (100) nach einem der Ansprüche 1 bis 13, optional umfassend ein Brenngasgerät.

## Revendications

1. Robinet à tournant (100) comportant :
un corps (10) ;
un siège de robinet (20) monté sur le corps (10) et ayant une colonne de montage creuse (22) disposée sur celui-ci, la colonne de montage (22) ayant un premier espace (222) et un deuxième espace (224) qui sont définis dans une paroi latérale circonférentielle de celle-ci ;
une tige de robinet (30) disposée sur le siège de robinet (20) et pénétrant dans la colonne de montage (22), dans lequel la tige de robinet (30) a une rainure de déclenchement (31) définie dans une surface périphérique extérieure de celle-ci, et la rainure de déclenchement (31) comporte une surface de déclenchement supérieure (312) et une surface de déclenchement inférieure (314) ;
un premier commutateur (32) monté sur le siège de robinet (20) et comportant une première borne de déclenchement (322) pénétrant dans le premier espace (222) ; et
le deuxième commutateur (34) monté sur le siège de robinet (20) et comportant une deuxième borne de déclenchement (342) pénétrant dans le deuxième espace (224),
dans lequel le robinet à tournant (100) est configuré de telle sorte que :
quand la tige de robinet (30) est enfoncée, la première borne de déclenchement (322) est déclenchée par la surface de déclenchement supérieure (312) pour permettre au premier commutateur (32) de se mettre dans un premier état, et la deuxième borne de déclenchement (342) est déclenchée par la surface de déclenchement inférieure (314) pour permettre au deuxième commutateur (34) de se mettre dans un deuxième état ; et
quand la tige de robinet (30) est relâchée après avoir été enfoncée, la première borne de déclenchement (322) est déclenchée par la surface de déclenchement supérieure (312) pour permettre au premier commutateur (32) de se mettre dans un troisième état, et la surface de déclenchement inférieure (314) permet au deuxième commutateur (34) d'être maintenu dans le deuxième état ou la deuxième borne de déclenchement (342) est déclenchée par la surface de déclenchement inférieure (314) pour permettre au deuxième commutateur (34) de se mettre dans un quatrième état.

2. Robinet à tournant (100) selon la revendication 1, dans lequel la surface de déclenchement supérieure (312) est un plan et/ou la surface de déclenchement inférieure (314) est un plan.

3. Robinet à tournant (100) selon la revendication 1, dans lequel le premier espace (222) et le deuxième espace (224) sont partiellement opposés l'un par rapport à l'autre dans une direction prédéterminée, et la direction prédéterminée comporte une direction verticale.

4. Robinet à tournant (100) selon la revendication 1, dans lequel chacun du premier espace (222) et du deuxième espace (224) comporte un trou traversant.

5. Robinet à tournant (100) selon la revendication 1, dans lequel le premier commutateur (32) est dans un état normalement FERMÉ dans un cas de figure normal, et le deuxième commutateur (34) est dans un état OUVERT dans le cas de figure normal.

6. Robinet à tournant (100) selon la revendication 1, dans lequel la tige de robinet (30) a un bloc d'encliquetage (35) faisant saillie depuis un fond de celle-ci, le siège de robinet (20) a une surface de régulation (21) et une rainure d'encliquetage (23) qui sont définies dans le fond de celui-ci, et le bloc d'encliquetage (35) est situé dans le bloc d'encliquetage (35) pour limiter une rotation de la tige de robinet (30), dans lequel
quand la tige de robinet (30) est enfoncée, le bloc d'encliquetage (35) quitte la rainure d'encliquetage (23) pour supprimer une limitation sur la rotation de la tige de robinet (30) ;
quand la tige de robinet (30) tourne, le bloc d'encliquetage (35) est situé sur la surface de régulation (21) ; et
quand la tige de robinet (30) est relâchée après avoir été enfoncée, le bloc d'encliquetage (35) est situé sur la surface de régulation (21), ou le bloc d'encliquetage (35) est situé dans la rainure d'encliquetage (23).

7. Robinet à tournant (100) selon la revendication 6, dans lequel une différence de hauteur entre une surface inférieure (232) de la rainure d'encliquetage (23) et la surface de régulation (21) est inférieure à une distance, sur laquelle la surface de déclenchement supérieure (312) se déplace vers le bas pour venir buter contre la première borne de déclenchement (322) quand la tige de robinet (30) est enfoncée ; et
la différence de hauteur entre la surface inférieure (232) de la rainure d'encliquetage (23) et la surface de régulation (21) est supérieure à une distance, sur laquelle la surface de déclenchement inférieure (314) se déplace vers le bas pour quitter la deuxième borne de déclenchement (342) quand la tige de robinet (30) est enfoncée.

8. Robinet à tournant (100) selon la revendication 6, comportant par ailleurs une partie faisant saillie (40) disposée sur la surface de régulation (21), dans lequel la partie faisant saillie (40) et la rainure d'encliquetage (23) sont configurées ensemble pour limiter une plage d'angle de rotation de la tige de robinet (30).

9. Robinet à tournant (100) selon la revendication 1, comportant par ailleurs un noyau de robinet (50), un pointeau de noyau de robinet (58), un levier à genouillère (60) et un troisième commutateur (70), dans lequel le noyau de robinet (50) et le levier à genouillère (60) sont situés dans le corps (10), la tige de robinet (30) est en mesure d'entraîner le noyau de robinet (50) à des fins de rotation synchrone, le troisième commutateur (70) est relié au corps (10), le pointeau de noyau de robinet (58) est relié à la tige de robinet (30) et est configuré pour pénétrer dans le noyau de robinet (50), et la tige de robinet (30) est configurée pour entraîner, en réponse au fait que la tige de robinet (30) est enfoncée, le levier à genouillère (60) au travers du pointeau de noyau de robinet (58) à des fins de rotation pour déclencher le troisième commutateur (70).

10. Robinet à tournant (100) selon la revendication 9, comportant par ailleurs un ressort à pointeau de noyau de robinet (80) emmanché sur le pointeau de noyau de robinet (58) et configuré pour entraîner, en réponse au fait que la tige de robinet (30) est relâchée après avoir été enfoncée, la tige de robinet (30) à se déplacer.

11. Robinet à tournant (100) selon la revendication 10, dans lequel le noyau de robinet (50) a une première chambre (52), une deuxième chambre (54), et un trou de perforation de noyau de robinet (56) faisant communiquer la première chambre (52) avec la deuxième chambre (54),
le ressort à pointeau de noyau de robinet (80) est situé dans la première chambre (52) ; le robinet à tournant (100) comporte par ailleurs un élément d'étanchéité (524) situé dans la première chambre (52) ; le pointeau de noyau de robinet (58) est configuré pour pénétrer dans la première chambre (52), le trou de perforation de noyau de robinet (56) et la deuxième chambre (54) ; et le ressort à pointeau de noyau de robinet (80) est configuré pour bien enfoncer l'élément d'étanchéité (524) afin de sceller un espace entre le pointeau de noyau de robinet (58) et le trou de perforation de noyau de robinet.

12. Robinet à tournant selon la revendication 11, comportant par ailleurs un joint d'étanchéité (53) situé entre le ressort à pointeau de noyau de robinet (80) et l'élément d'étanchéité (524), ou, dans lequel la première chambre (52) a une rainure de montage (522) définie sur une surface inférieure (232) de celle-ci, et l'élément d'étanchéité (524) est au moins partiellement situé dans la rainure de montage (522).

13. Robinet à tournant (100) selon la revendication 1, dans lequel la première borne de déclenchement (322) a une première surface inclinée (3222) orientée vers la surface de déclenchement supérieure (312) et inclinée à l'opposé d'une direction axiale de la tige de robinet (30), et la deuxième borne de déclenchement (342) a une deuxième surface inclinée (3422) orientée vers la surface de déclenchement inférieure (314) et inclinée à l'opposé de la direction axiale de la tige de robinet (30).

14. Robinet à tournant selon la revendication 1, comportant par ailleurs un premier élément de fixation (28) et un deuxième élément de fixation (29), dans lequel le siège de robinet (20) a une première partie saillante (24), une deuxième partie saillante (25), un premier trou de fixation (26, 328), et un deuxième trou de fixation (27, 348) qui sont mis en oeuvre sur le siège de robinet (20) ; le premier commutateur (32) a un premier évidement et un premier trou de montage ; le deuxième commutateur (34) a un deuxième évidement et un deuxième trou de montage ; la première partie saillante (24) est située dans le premier évidement ; le premier élément de fixation (28) est configuré pour pénétrer dans le premier trou de montage et est relié à une paroi de trou du premier trou de montage pour fixer le premier commutateur (32) ; la deuxième partie saillante (25) est située dans le deuxième évidement ; et le deuxième élément de fixation (29) est configuré pour pénétrer dans le deuxième trou de montage et est relié à une paroi de trou du deuxième trou de fixation (27, 348) pour fixer le deuxième commutateur (34).

15. Appareil ménager, comportant le robinet à tournant (100) selon l'une quelconque des revendications 1 à 13, comportant éventuellement un appareil à gaz combustible.
